# NEUE EUROPÄISCHE PATENTSCHRIFT

(11) **EP 0 712 188 B2**
(45) Veröffentlichungstag und Bekanntmachung des Hinweises auf die Entscheidung über den Einspruch: **25.01.2006**
(45) Hinweis auf die Patenterteilung: 17.12.1997
(21) Anmeldenummer: 95114160.5
(22) Anmeldetag: 09.09.1995
(51) Int. Cl.: H02G 3/04

(54) **Leitungskanal**
Cable duct
Conduite pour câbles

(30) Priorität: 08.11.1994 DE 9417832 U
(43) Veröffentlichungstag der Anmeldung: 15.05.1996
(73) Patentinhaber: REHAU AG + Co, 95111 Rehau (DE)
(72) Erfinder: Schinzel, Hartmut, D-95111 Rehau (DE); Metzger, Manfred, D-95111 Rehau (DE)
(74) Vertreter: Grünecker, Kinkeldey, Stockmair & Schwanhäusser Anwaltssozietät

(56) Entgegenhaltungen:
- EP-A- 0 271 891
- EP-A- 0 504 496
- DE-A- 2 432 746
- DE-A- 3 908 310
- DE-U- 7 323 586
- DE-U- 7 441 049
- DE-U- 8 423 236
- DE-U- 9 115 442
- DE-U- 9 315 256
- DE-U- 9 417 832
- DE-U- 29 521 219
- GB-A- 595 655
- GB-A- 1 372 261
- GB-A- 2 128 223
- GB-A- 2 174 254
- GB-A- 2 233 731
- GB-A- 2 254 966
- Prospect der Firma TEHALIT aus dem Jahre 1993
- Aufsatz "Installationskeramik für moderne Bauten" aus "Industrie-Elektrik + Elektronik", 1967, Nr. B3 (S. 37)
- TAB Technik am Bau 3/95, S. 130
- Prospekt "MK PRODUCT RANGE" 1988-90 der Firma Caradon MK Electric Limited, Seiten 98-99
- Prospekt "General Catalogue 1992" der Firma Lume System SpA Divisione Lume Canali, insbesondere Seiten 10, 11, 88, 89
- Prospekt CANALPLAST "Listino prezzi - Price List 1/1991 der Firma Canalplast, insbesondere Seiten 20, 22, 57
- GB-Geschmacksmuster Nr. 10 26 040
- GB-Geschmacksmuster Nr. 10 26 041
- "Prestige" the versatile trunking system from Ega, 1985, Deckblatt, S. 2-15 und Endblatt

## Beschreibung

Die Erfindung betrifft einen Leitungskanal für die Verlegung von erwärmte Fließmedien führende Rohrleitungen in Kombination mit Kabeln für die Elektroversorgung von Verbrauchern, wobei für jede Belegungsart ein gesonderter Kanalbereich vorgesehen ist und die Kanalbereichs für die verschiedenen Belegungsarten über wenigstens eine zwischen den Kanalbereichen angeordnete Hohlkammer miteinander verbunden sind. Ein solches Leitungskanal ist z.B. aus der GB 2 233 731 bekannt.

Ein derartiger Leitungskanal ist auch aus dem DE-U 93 15 256.6 bekannt. Beschrieben ist in dieser Veröffentlichung ein Leitungsführungskanal zur Installation in Wohnräumen. Der Kanal besteht aus einem U-förmigen Basisteil sowie einem die U-Öffnung abdeckenden haubenförmigen Abdeckteil. Dabei ist das U-förmige Basisteil in zwei durch einen Steg getrennte Kammern teilbar, wobei die eine Kammer zur Aufnahme von Elektrokabeln und die andere Kammer zur Aufnahme von Leitungen für andere Medien ausgelegt ist.

Die Leitungen für andere Medien können. Wasserrohrleitungen, Gasrohrleitungen oder Heizungsrohrleitungen sein.

Um die beim Einsatz von Heizungsrohrleitungen auftretenden Temperaturprobleme zu beseitigen, wird in der Vorveröffentlichung vorgeschlagen, daß über die Helzuhgsrohrleitungen aufsteckbare, wahlweise längsgeschlitzte Dämmstoffprofile aufgebracht oder die Heizungsrohrleitungen selbst von einer Isolierstoffhülle umgeben sind.

Die Ummantelung der Heizungsrohre mit dem Isolierstoff selbst hat den gravierenden Nachteil, daß die Leitungen in einem zusätzlichen Arbeitsgang über die gesamte Lange mit dem Isolierstoff umgeben werden müssen. Dadurch entsteht neben dem zusätzlichen Materialaufwand ein erheblicher weiterer Montageaufwand, denn Abgänge, T-Stücke und dergleichen müssen montageaufwendig isoliert werden.

Darüber hinaus sind die Auswirkungen der Temperaturen des Heizmediums in den Leitungsrohren auf die Elektroleitungen in dieser Vorveröffentlichung nicht berücksichtigt.

In der DE-U 93 11 700.0 ist ein weiterer vergleichbarer Leitungsführungskanal für unterschiedliche Versorgungsmedien beschrieben, der ebenfalls eine Trennung durch einen Steg zwischen dem Elektrobereich und dem Heizleitungsbereich des Kanals zeigt. Dort ist unter anderem ausgeführt, daß bei einem Leitungskanal aus 70° wärmebeständigem Kunststoffmaterial die Heizleitungen über die Gesamtlänge isoliert werden müssen. Bei einem bis 140° wärmebeständigem Kunststoffkanal oder einem Metallkanal können die Isolierungen der Heizleitungen sogar ganz entfallen.

Diese Hinweise können nur als nachteilig angesehen werden, denn die Wärmeentwicklung der Heizungsrohre wird hier vernachlässigt. Gemäß VDE-Richtlinie 0298 Teil 4 (Ausgabe Februar 1988) müssen in diesem Fall die Absicherungswerte der Elektroleitungen der Wärmeentwicklung der Heizungsrohre angepaßt werden, So kann beispielsweise eine Elektroleitung NYM 3 x 1,5 mm² in einer Kanalinstallation mit zwei stromführenden Leitern mit 15,5 A bei 30°C Umgebungstemperatur abgesichert werden. Bereits bei 40°C reduziert sich die Belastbarkeit auf 13,48 A, bei 60° auf 7,75 A. Hierdurch ist aber ein einwandfreier Betrieb von Verbrauchern nicht mehr möglich, da z.B. ein Bodenstaubsauger eine Absicherung von ca. 10 A benötigt.

Hier setzt die Erfindung ein, die es sich zur Aufgabe gestellt hat, einen Leitungskanal für die Verlegung von erwärmte Fließmedien führende Rohrleitungen in Kombination mit Kabeln für die Elektroversorgung von Verbrauchern anzugeben, bei dem die Nachteile des Standes der Technik vermieden werden. Es ist weiter Aufgabe der Erfindung, einen solchen Kanal montagefreundlich zu gestalten, so daß insbesondere zeitraubende Montagearbeiten vor Ort entfallen können. Die Aufgabe wird gelöst durch einen Leitungkanal gemäß Anspruch 1. Eine vorteilhaft Ansführungsform ist in Anspruch 2 bransprucht.

Die beiden Belegungskammern des erfindungsgemäßen Leitungskanals können übereinander oder voreinander angebracht werden. Wichtig dabei ist, daß beide Kammern jeweils von dem Hohlkammersystem getrennt sind. Das Hohlkammersystem besteht erfindungsgemäß auch aus mehreren hintereinander geschalteten Teilhohlkammern. Diese Teilhohlkammern können durch gegeneinander versetzte Trennstege zusätzlich unterteilt sein, um die Isolierwirkung der z.B. nur mit Luft gefüllten Teilhohlkammern zu erhöhen. Das Hohlkammersystem kann zusätzlich eine Schaumisolierung beinhalten, muß es aber nicht.

Eine Kombination von mehreren hintereinander angeordneten Hohlkammern - im Beispielsfall von je 4 mm lichter Weite und einer wärmereflektierenden Schicht wird zur akzeptablen Reduzierung der Wärmestrahlung aus dem Heizungsrohrbereich benutzt. Die wärmereflektierende Schacht kann beispielsweise in Form einer Aluminiumfolie, einer Bedampfung, einer Lackierung usw. vorliegen. Sie kann an der Innenwand oder der Außenwand einer oder mehrerer der Hohlkammern angeordnet sein.

Der erfindungsgemäße Leitungskanal kann mit den beiden Belegungskammern und dem diese trennenden Isolierteil einstückig hergestellt sein. Es liegt jedoch auch im Rahmen der Erfindung, Teilbereiche des Leitungskanals getrennt voneinander zu fertigen und im Bedarfsfall durch Rast- oder ähnliche Verbindungselemente aneinander festzulegen.

Durch diese erfindungsgemäßen Kombinationsmöglichkeiten wird gewährleistet, daß je nach Temperatur der Heizungsrohre über die Hohlkammern im Elektrobereich des Leiturigskanals eine maximale Temperatur von 25°C herrscht. Dadurch ist in allen Anwendungsfällen ein einwandfreier Betrieb von Verbrauchern beim Anschluß an die Elektroleitungen des Leitungskanals gewährleistet.

In der Zeichnung sind Ausführungsbeispiele des Leitungskanals schematisch dargestellt; es zeigt:
Fig. 1 den nicht erfindungsgemäßen Leitungskanal mit mittiger Hohlkammer und Isolierstoff-Füllung.
Fig. 2 den mittleren Ausschnitt des nicht erfindungemäßen Leitungskanals mit Hohlkammer geringer lichter Weite und querschnittsverringertem Isolierstoffstreifen.
Fig. 3 den mittleren Abschnitt des erfindungemäßen Leitungskanals mit mehreren Hohlkammern ohne Isolierstoff.

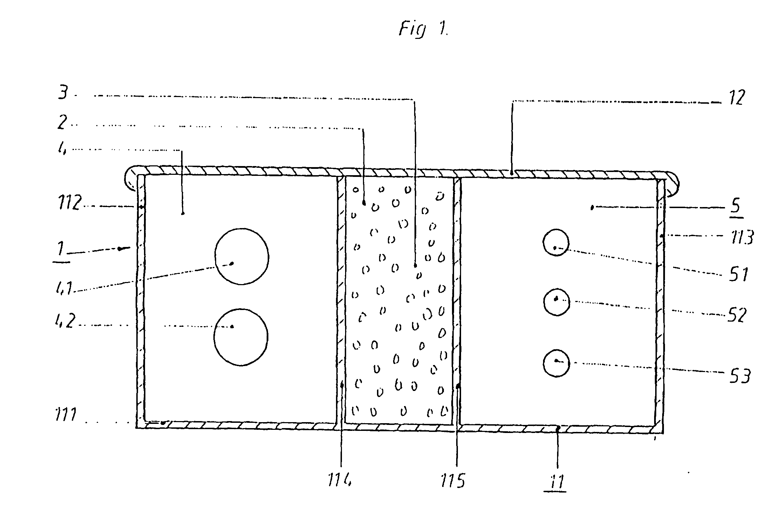

Fig. 1 zeigt den nicht erfindungsgemäßen Leitungskanal 1 mit seinem U-förmigen Unterteil 11 und dem Abschlußdeckel 12.

Das U-förmige Unterteil 11 besteht aus dem Boden 111 und den beiden Seitenwänden 112, 113. Im mittleren Bereich des U-förmigen Unterteils 11 sind die Wände 114, 115 der Hohlkammer2 angeformt. Die Hohlkammer 2 ist mit isolierendem Schaumstoff 3 ausgefüllt, wobei dieses Schaumstoffmaterial mit den Innenflächen der Wandbereiche 114, 115 verbunden ist.

In der Hohlkammer 4 sind die nicht isolierten Heizungsrohrleitungen 41, 42 angeordnet, während in der Hohlkammer 5 die Elektroleitungen 51, 52, 53 angedeutet sind.

Es liegt im Rahmen der Erfindung, weitere Elektroleitungen, die in der Zeichnung nicht gezeigt sind, in der Hohlkammer 5 anzuordnen. Das gleiche gilt für weitere Heizleitungen in der Hohlkammer 4.

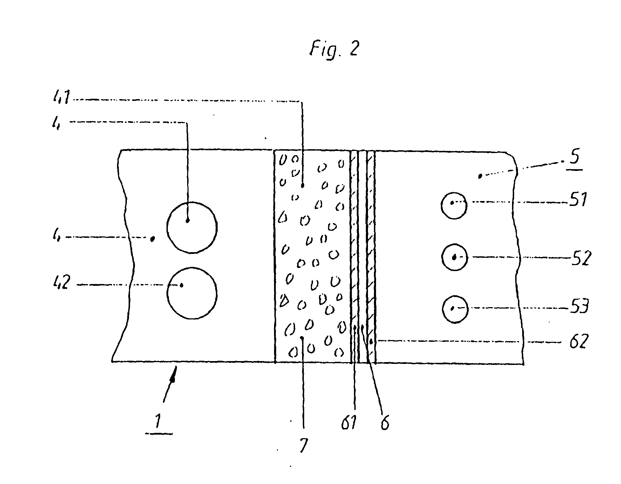

Figur 2 zeigt lediglich den mittleren Ausschnitt des Leitungskanals 1 mit dem speziellen Aufbau des lsolierteils. Das Isolierteil besteht hier aus der Hohlkammer 6, die von den beiden Hohlkammerwänden 61, 62 umschlossen ist. An die Hohlkammerwand 61 schließt sich in die Hohlkammer 4 ein Isolierstoffstreifen 7 an, welcher in Kombination mit der Hohlkammer 6 die Heizrohrleitungen 41, 42 von den Elektroleitungen 51, 52, 53 in der Hohlkammer 5 isoliert. An die Seitenwände 61, 62 der Hohlkammer 6 kann innen und/oder außen eine in der Zeichnung nicht extra dargestellte wärmereflektierende Schicht aufgebracht sein.

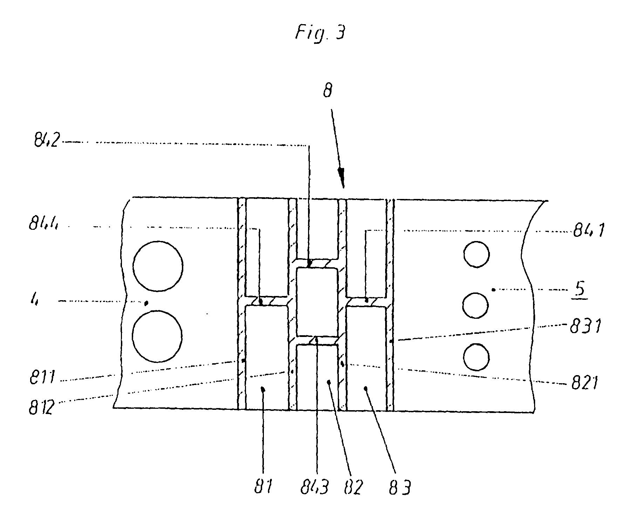

Fig. 3 zeigt die Darstellung nach Fig. 2 ohne Isolierstoffstreifen 7. An dessen Stelle sind die mehreren Hohlkammern 81, 82, 83 getreten, die ohne zusätzlichen Isolierstoffstreifen das Isolierteil 8 zwischen den Hohlkammern 4, 5 bilden. Die Teilhohlkammern 81, 82, 83 besitzen die Kammerwände 811, 812, 821, 831, die im Bedarfsfall zusätzlich innen und/oder außen mit wärmereflektierenden Schichten belegt sein können. Die Teilhohlkammern 81, 82, 83 sind durch gegeneinander versetzte. Trennstege 841, 842, 843, 844 zusätzlich unterteilt, wodurch mit den dadurch geschaffenen Teillufträumen die Isolierwirkung zwischen den Hohlkammern 4, 5 verstärkt wird.

## Patentansprüche

1. Leitungskanal für die Verlegung von erwärmte Fließmedien führenden Rohrleitungen in Kombination mit Kabeln für die Elektroversorgung von Verbrauchern, wobei für jede Belegungsart ein gesonderter Kanalbereich vorgesehen ist, und die Kanalbereiche (4, 5) für die verschiedenen Belegungsarten über wenigstens eine zwischen den Kanalbereichen (4, 5) angeordnete Hohlkammer (2, 6, 8) miteinander verbunden sind, **dadurch gekennzeichnet daß** die Hohlkammer (2, 6, 8) durch mehrere hintereinandergeschaltete Teilhohlkammern gebildet wird.

2. Leitungskanal nach Anspruch 1, **dadurch gekennzeichnet, dass** in die Teilhohlkammern (81, 82, 83) gegeneinander versetzte Trennstege (841, 842, 843, 844) eingeformt sind.

## Claims

1. Routing trunking to lay piping conveying heated, flowing media in combination with cables for the electrical supply of consumers, in which separate sections of the trunking are provided for each type and the trunking sections (4, 5) for the different types are interconnected by at least one hollow chamber (2, 6, 8) located between the trunking sections (4, 5) **characterised by**: The hollow chamber (2, 6, 8) is formed by several adjacent hollow chamber sections.

2. Routing trunking according to Claim 1, **characterised by:** Separating webs (841, 842, 843, 844) which are offset against each other are moulded into the hollow chamber sections (81, 82, 83).

## Revendications

1. Goulotte de distribution pour la pose de tuyauteries conduisant des fluides réchauffés en combinaison avec des câbles pour l'alimentation électrique de consommateurs, une zone de goulotte étant prévue pour chaque type de pose et les zones de goulotte (4,5) pour les différents types de pose étant reliées entre elles pour les différents types de pose via au moins d'une chambre creuse (2,6,8) disposée entre les zones de goulotte (4,5), **caractérisée en ce que** la chambre creuse (2,6,8) est formée par des chambres creuses partielles commutées les unes derrière les autres.

2. Goulotte de distribution selon la revendication 1, **caractérisée en ce que** les traverses de séparation (841, 842, 843, 844), décalées les unes par rapport aux autres dans les chambres creuses partielles (81, 82, 83), sont moulées.
